# EUROPEAN PATENT SPECIFICATION

(11) **EP 3 399 892 B1**
(45) Date of publication and mention of the grant of the patent: **01.01.2020**
(21) Application number: 17700202.9
(22) Date of filing: 06.01.2017
(51) Int. Cl.: A47J 31/44

(54) **BEVERAGE MACHINE WITH A CONFIGURATION FOR SAFE STANDING**
GETRÄNKEMASCHINE MIT EINER KONFIGURATION ZUM SICHEREN STEHEN
MACHINE À BOISSONS CONÇUE POUR UNE STATION DEBOUT SÉCURISÉE

(30) Priority: 08.01.2016 WO PCT/US2016/012670
(43) Date of publication of application: 14.11.2018
(73) Proprietor: Société des Produits Nestlé S.A., 1800 Vevey (CH)
(72) Inventor: BRANKO, Lukic, Menlo Park California 94025 (US); CROZIER, Etienne, 2520 La Neuveville (CH); GUYON, Bertrand, 25160 Saint Point Lac (FR); KILPATRICK, Kevin, Mountain View California 94040 (US); MAGATTI, Marco, 1010 Lausanne (CH); OBLIGER, Nicolas, 25170 Franey (FR); RYUTARO TAKAYAMA, Steven, Menlo Park California 94025 (US); THULIEZ, Jean-Luc, 2525 Le Landeron (CH)
(74) Representative: Schnyder, Frank Simon
(86) International application number: PCT/EP2017/050239
(87) International publication number: WO 2017/118715

(56) References cited:
- WO-A1-2012/055767
- WO-A2-2014/037299
- DE-A1-102012 200 322

## Description

### Field of the Invention

The field of the invention pertains to beverage preparation machines having a configuration for safely standing on a support surface, e.g. machines using capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage portion or a plurality of beverage portions.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Ingredient mixing modules, e.g. brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule. The actuation of the movable part of the brewing device may be manual as disclosed in WO 2009/043630, WO 01/15581, WO 02/43541, WO 2010/015427, WO 2010/128109, WO 2011/144719 and WO 2012/032019. Various handle configurations are disclosed in EP 1867260, WO 2005/004683, WO WO2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720. Integrations of such arrangements into beverage machines are disclosed in WO 2009/074550, WO2011/144719, EP2014195046, EP2014195048 and EP2014195067. The actuation of the movable part of the brewing device may be motorized, as for example disclosed in EP 1 767 129, WO 2012/025258, WO 2012/025259 and WO 2013/127476.

A beverage machine typically includes a housing containing a beverage processing module and a water tank in fluid communication with the beverage processing module. Examples of such beverage machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553, WO 2010/015427, WO 2011/089210 and WO 2012/055767. Usually the water tank is removable to be refilled by a user when empty. Some systems include a continuous water supply by connecting the beverage machine to the city water distribution network, as for instance disclosed in CN201076369, PCT/EP15/065409, PCT/EP15/065410, PCT/EP15/065411 and PCT/EP15/065414.

For improving the stability of the machine when placed on an external support surface, it is known to provide the machine with a foot that is larger than the body of the machine, e.g. as illustrated in WO 2009/074550.

### Summary of the Invention

The invention relates to a machine for preparing a beverage. The beverage preparation machine can be an in-home or out of home machine. The machine may be for the preparation of coffee, tea, chocolate, cacao, milk, soup, baby food, etc...

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. Typically, a predetermined amount of beverage is formed and dispensed on user-request, which corresponds to a portion (e.g. a serving). The volume of such portion may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc... In particular, a coffee machine may be configured for dispensing espressos, e.g. an adjustable volume of 20 to 60 ml per portion, and/or for dispensing lungos, e.g. a volume in the range of 70 to 150 ml per portion.

The beverage preparation machine of the invention has a body.

Such body includes a fluid line extending from a liquid inlet to a beverage outlet, such as a liquid inlet connectable to a source of liquid. For instance, the liquid source is or includes a liquid tank that has an outlet connected to the liquid inlet. The machine may also be directly connected to the city water distribution network so as to be continuously supplied with water.

The beverage outlet is typically located above a placement location for a beverage recipient, e.g. a cup or a mug.

The placement location can be associated with a machine recipient support for supporting such user-recipient under the outlet. The support can be: associated with a drip tray e.g. a drip tray supporting the support; and/or movable relative to the housing vertically under the outlet and/or away from under the outlet for enabling a placement of user-recipients of different heights under the outlet. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP 2014198712, EP 2014198710 and EP 2014198715.

The fluid line may include at least one of: a liquid sensor, e.g. a flowmeter and/or a pressure sensor and/or a temperature sensor; a pump for driving a liquid from a or said source to the outlet, e.g. a solenoid pump (reciprocating piston pump) or a peristaltic pump or a diaphragm pump; and a thermal fluid conditioner such as a heater and/or a cooler.

The thermal conditioner may be a boiler or a thermoblock or an on demand heater (ODH), for instance an ODH type disclosed in EP 1 253 844, EP 1 380 243 and EP 1 809 151.

Examples of pumps and their incorporation into beverage machines are disclosed in WO 2009/150030, WO 2010/108700, WO 2011/107574 and WO 2013/098173.

The machine typically includes a control unit for controlling the fluid line to supply the beverage to the outlet.

The machine can have a user-interface connected to the control unit. Hence, a user can provide user-instructions to the control unit via the user-interface for operating the machine.

The body includes a bottom that has a periphery. The bottom forms a foot for placing such machine on an external support surface in an orientation for dispensing a beverage via the beverage outlet.

The body has an outside face that is user-visible when the machine is placed on the bottom. Hence, above the bottom, the outside face is not partly hidden by other machine elements to the user.

The outside face extends along substantially the entire periphery.

The outside face delimits an opening of a body inlet for supplying to the fluid line, e.g. to a mixing chamber comprised in the fluid line, a flavouring ingredient. For instance, the flavouring ingredient is supplied within a capsule to the fluid line.

A suitable mixing chamber may be formed by first and second parts that are relatively moved manually or by a motor e.g. as disclosed in EP 1767129, WO 2012/025258, WO 2012/025259, WO 2013/127476 and WO 2014/056641 and in the references cited above.

Such capsule may be of the type described above under the title "Field of the Invention" and/or the capsule may include an ingredient described under the same title.

The capsule can comprise a capsule body, e.g. a generally straight or tapered body. The capsule can have a circular peripheral annulus flange, e.g. a flexible or rigid flange, extending from a peripheral part, e.g. an edge or face, of the capsule body. The capsule may contain a flavoring ingredient for preparing tea, coffee, hot chocolate, cold chocolate, milk, soup or baby food.

Self-opening capsules are for instance disclosed in CH 605 293 and WO 03/059778.

The opening of capsules by a machine's piercing elements of a plate is for example disclosed in EP 512 470 and EP 2 068 684.

Examples of suitable mixing chambers are disclosed in WO 2008/037642 and WO 2013/026843.

A flavoured beverage may be prepared by circulating (by means of a liquid driver, e.g. a pump) a carrier liquid, such as water, into the capsule to flavour the liquid by exposure to a flavouring ingredient held in the capsule, e.g. along an extraction direction that may be generally parallel to the direction of relative movement of the first and second parts of the mixing chamber.

When closed capsules are used, the first and second parts may include a capsule opener such as blades and/or a tearing tool, e.g. a plate with a tearing profile, for instance as known from Nespresso™ machines or as disclosed in EP 0 512 470, EP 2 068 684 and WO 2014/076041 and the references cited therein.

The outside face extends all over the body from the periphery of the bottom to the opening of the body inlet over the bottom to confine the body. The outside face has outwardly protruding edges.

The body has an operative mode for driving liquid from the inlet to the outlet and an inoperative mode when such machine is switched-off or in a standby mode.

In accordance with the invention, no outwardly protruding edge that is user-visible in the inoperative mode and confined within the outside face, has a radius of less than 5 mm, such as a radius of less than 10 mm, e.g. a radius of less than 20 mm, for instance a radius of less than 30 mm.

Hence, at least when the machine is not in use for an extended period of time, i.e. switched-off or in a standby mode, the outside face is free of outwardly protruding sharp and catching edges between the periphery of the bottom and the opening of the body inlet. The machine's protruding edges that are located on the outside face in the inoperative mode are all rounded. Only at the bottom of the machine itself and/or at the opening of the body inlet sharper edges may be provided. It follows that the risk of a user getting unintentionally caught by a sharp machine edge, e.g. formed by a corner or a handle or an outlet or another machine part, upon contacting the machine without being minded to operate it, is significantly reduced or eliminated. It follows that the machine is less exposed of being unintentionally thrown over or down from the external support surface.

In one embodiment, one or more outwardly protruding edges delimited by the outside face and the bottom at the periphery of the bottom and/or one or more outwardly protruding edges delimited by the outside face and the body inlet at the opening of the body inlet has a radius/radii of less than 5 mm, e.g. in the range of 0.1 to 3 mm. Such sharp edges can thus be provided at locations which are not likely to form a catch for an inattentive user.

In another embodiment, one or more outwardly protruding edges delimited by the outside face and the bottom at the periphery of the bottom and/or one or more outwardly protruding edges delimited by the outside face and the body inlet at the opening of the body inlet has no radius of less than 5 mm. Thus it is possible to avoid all sharp edges on the machine's body.

The user-visible outwardly protruding edges confined within the outside face (in the inoperative mode) can all be devoid of any radius of less than 10 mm, such as any radius of less than 20 mm, e.g. any radius of less than 30 mm.

The outside face may be generally convex and/or rounded from the bottom to the opening of the body inlet.

The outside face can be made of: at least one extremal side, e.g. a front side and/or a rear side; at least two lateral sides extending from the extremal side(s); and at least one top side. For instance, the outside face is made of lateral and extremal and top sides connected to each other by round angles. Such round angles can have a minimal radius of at least 5 mm, e.g. in the range of 10 to 50 mm.

The machine may include the above tank as well as a carrier assembled to the body for carrying the liquid tank. The carrier can be movable with the liquid tank as a unit inwards into the body into an operative position for supplying liquid to the liquid inlet and outwards from the body into a service position, such as a service position for filling the tank with liquid and/or cleaning the tank.

The liquid tank may be removable from the carrier in the service position, the outlet of the liquid tank being disconnectable from the liquid inlet. For instance, the tank has a connector for fastening the tank to the carrier. The connector may be configured for fastening mechanically and/or magnetically the tank to the carrier. The connector can be located about the outlet and spaced apart therefrom.

The tank may have a handle for lifting the tank and/or for operating a lid of the tank between an open and a closed position. For instance, the handle is movable, e.g. pivotable, into a collapsed position for moving the carrier with the tank into the operative position and being movable, e.g. pivotable, into a deployed position for facilitating seizure of the handle when the carrier with the tank is in the service position.

The machine may have a waste collector for collecting waste material, such as waste ingredient from the fluid line and/or waste liquid from the fluid line.

The waste collector can be carried by a carrier assembled to the body for carrying the waste collector. The carrier can be movable with the waste collector as a unit inwards into the body into an operative position for collecting waste material and outwards from the body into a service position for emptying the waste collector. For instance, the waste collector is removable from the carrier in the service position.

The tank (when present) can be carried by the carrier carrying the waste collector so that the carrier is movable with the waste collector and the tank as a unit inwards into the body into the operative position and outwards from the body into the service position. The waste collector may be located adjacent to the liquid tank when carried by the carrier. The waste collector may be located between the liquid tank and the body when the carrier is in the service position.

The carrier may have a holding member holding the tank, and optionally a or the waste collector. The holding member can be generally shaped as an arm moving, e.g. sliding, inwards into and outwards from the machine's body.

The liquid inlet of the body's fluid line may be fixed to the carrier, such as to a or the holding member holding the tank, and may be movable with the carrier.

The body may delimit a seat, e.g. a cavity, for receiving the unit in the operative position. For instance, the carrier has an external panel or wall for covering the seat in the operative position.

The carrier, the unit, and/or when present the seat, can comprise or be associated with sensing arrangements, such as at least one of: a water presence or level sensor; waste presence or level sensor; cup presence or recognition sensor. Such sensors may then communicate with a control unit of the machine and trigger various functionalities, e.g. information to a user, allowing or preventing fluid processing, etc...

By moving the carrier with the liquid tank and/or waste collector inwards into the body, the tank and/or waste collector is better protected against external stresses or shocks, e.g. resulting from unwanted human movements, disturbing its supply of liquid to the fluid line or, worse, forcing the tank and/or waste collector entirely out from the machine.

The outside face may be formed by a main outside housing, the carrier, e.g. an or the external panel or wall, being generally flush with the outside housing in the operative position. Typically, the carrier will be left in the operative position when the machine is switched-off or in a standby mode or otherwise not in use.

The machine, e.g. its body, may have an ingredient supply gate that has an open configuration for allowing a transfer of the flavouring ingredient along the ingredient inlet to the fluid line and a closed configuration for preventing the transfer of the flavouring ingredient along the ingredient inlet to the fluid line. For instance, the gate includes an obstacle, such as one or more sliding and/or swing doors, deployed across the ingredient inlet in the closed configuration and at least partly retracted from across the ingredient inlet in the open configuration. This obstacle can form an ingredient holder, e.g. an ingredient capsule holder, for holding the ingredient prior to the transfer to the fluid line.

Details of suitable capsule holders are disclosed in WO 2012/126971, WO 2014/056641, WO 2014/056642 and WO 2015/086371.

The holder may have a capsule sensor for sensing a presence of a capsule on the capsule holder and optionally sensing a type of the capsule. The capsule holder can be controlled by the control unit to automatically release a sensed capsule when the mixing chamber is in the transfer position. When a particular type of capsule is identified, the control unit may adapt the control of the preparation unit of the beverage according to the identified type.

Details of suitable capsule sensing are disclosed in WO 2012/123440, WO 2014/147128, PCT/EP15/060555, PCT/EP15/060561, PCT/EP15/060567, PCT/EP15/065415 and PCT/EP15/065535.

The beverage outlet can be mounted in an outlet head of the body that is retractable into a rest position and is deployable into a beverage dispensing position. For instance, the outlet head has an external panel or wall that is generally flush with a or the main outside housing of the body in the rest position. Typically, the outlet head will be left in the rest position when the machine is switched-off or in a standby mode or otherwise not in use. Exemplary outlet heads are described in PCT/US15/048691 and PCT/US15/48693.

In an embodiment, the opening of the body inlet is located on the outlet head, or on another retractable part, that is retracted in the body so as to hide the opening of the body when the body is in the inoperative mode. Examples of a retractable opening of a body inlet are disclosed in WO 2009/043630.

The beverage machine may include at least one resilient member at the periphery of the bottom to form a vibration-dampening foot for placing such machine on an external support surface in an orientation for dispensing a beverage via the beverage outlet.

The resilient member can be water-repellent and extend generally along the periphery to prevent passage beyond the member of water-based liquid on the external support surface to underneath the bottom. For instance, the water-based liquid is in the form of spills from the beverage outlet or from the above liquid source.

Thus, such elongated water-resistant and resilient member forms a barrier against the passage of liquid to underneath the bottom.

Hence, when liquid is spilled on the external support surface around the machine, such as beverage e.g. residual beverage or liquid from another source near the beverage machine, this liquid is prevented from draining underneath the beverage machine and infiltrating the machine by the presence and configuration of the resilient member that is also water-repellent and forms a barrier against the passage of such liquid.

Depending on the circumstances and construction of the machine, the resilient member can be placed only along part of the bottom's periphery, e.g. under the beverage outlet and/or liquid source, or along the entire bottom's periphery.

The water-repellent and resilient member(s) may extend uninterruptedly on each side of the periphery below the beverage outlet.

The water-repellent and resilient member(s) can extends uninterruptedly on each side of the periphery below the liquid tank.

The resilient member(s) may be in a generally continuous configuration extending generally along the entire periphery or at least along a predominant part thereof, such as extending in an uninterrupted configuration along the entire periphery.

The resilient member(s) at the periphery of the bottom can be configured to space the bottom by no more than 2 mm over the external support surface at the resilient member (s) .

A greater or smaller spacing may be provided between the bottom and the external support surface behind the resilient member(s). Typically, however, the spacing will be generally the same.

For instance, the resilient member(s) at the periphery of the bottom is configured to space the bottom by no more than 1 mm, such as no more than 0.5 mm.

The outside face may form at least one extremal side, e.g. a front side and/or a rear side, and at least two lateral sides extending from the extremal side(s), and at least one top side. For instance, the outside face forms lateral and extremal and top sides connected to each other. The above source, e.g. tank, and the outlet being located at the same or different extremal sides. The resilient member(s) can extend from under the extremal side(s) at which the source and the outlet are located and can extend along and under the lateral sides that extend from the extremal sides(s).

### Brief Description of the Drawings

The invention will now be described with reference to the schematic drawings, wherein:
- Figure 1 is a perspective view from the side of a machine according to the invention having a dispensing head and a carrier retracted within the machine;
- Figure 2 is a perspective view from below the machine of Fig. 1 in which the dispensing head is in a deployed position and the carrier in the operative position;
- Figure 3 is a perspective view from above of the machine of Fig. 1 in which the carrier is between the operating position and a service position;
- Figs 4 and 5 are a perspective view from the side and from above, respectively, of the machine of Fig. 1 in which the carrier is in the service position with the liquid tank removed from the carrier;
- Figure 6 is a perspective view of the tank after removal from the carrier;
- Figures 7 is a perspective view from below of the machine of Fig. 1 showing the bottom of the machine, an enlarged view of the bottom being shown in Fig. 8.

### Detailed description

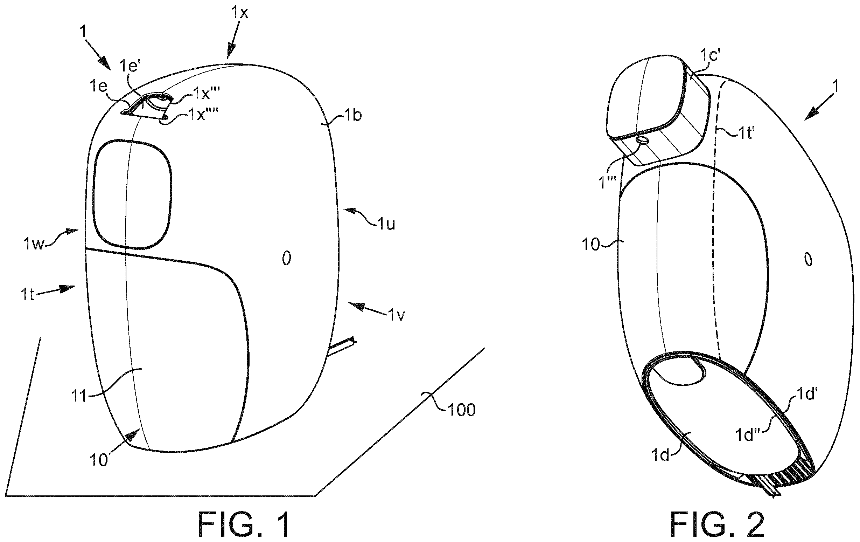

Figures 1 to 8 illustrate an exemplary embodiment of a beverage preparation machine 1 in accordance with the invention.

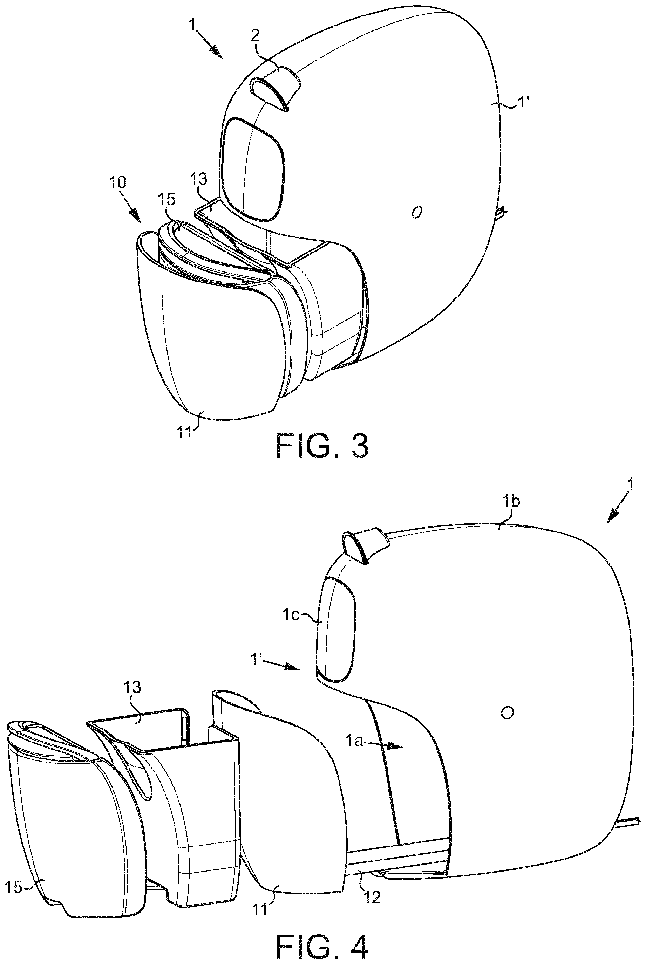

As illustrated in Figs 3 and 4, the ingredient may be supplied in the form of an ingredient capsule 2, e.g. of the type described above under the header "Field of the Invention".

Machine 1 has a body 1' that includes a fluid line 1",1''' extending from a liquid inlet 1" to a beverage outlet 1"'. Liquid inlet 1" may be connectable to a source of liquid, e.g. a liquid tank 15 that has an outlet 16 connected to liquid inlet 1". See Figs 2, 3 and 5.

Body 1' has a bottom 1d with a periphery 1d'. Bottom 1d forms a foot for placing such machine 1 on an external support surface 100 in an orientation for dispensing a beverage via beverage outlet 1"'. See Figs 2, 7 and 8.

Body 1' includes an outside face 1b,1c,11, 1t,1u,1v,1w,1x that is user-visible when machine 1 is placed on bottom 1d. Outside face 1b,1c,11,1t,1u,1v,1w,1x extends along substantially the entire periphery 1d' of bottom 1d.

Outside face 1b,1c,11,1t,1u,1v,1w,1x delimits an opening of a body inlet 1e for supplying to fluid line 1",1''', e.g. to a mixing chamber comprised in fluid line 1",1''', a flavouring ingredient. Such ingredient can be supplied within a capsule 2 to fluid line 1",1'''. See Figs 1, 3 and 5.

Outside face 1b,1c,11,1t,1u,1v,1w,1x extends all over body 1' from periphery 1d' of bottom 1d to the opening of body inlet 1e over bottom 1d, to confine body 1'.

Outside face 1b,1c,11,1t,1u,1v,1w,1x has outwardly protruding edges 1t',1u',1v',1w',1x".

Body 1' has an operative mode for driving liquid from inlet 1" to outlet 1'" and an inoperative mode when such machine 1 is switched-off or in a standby mode.

No outwardly protruding edge 1t',1u',1v',1x',1x" that is user-visible in the inoperative mode and confined within the outside face 1b,1c,11,1t,1u,1v,1w,1x, has a radius of less than 5 mm, such as a radius of less than 10 mm, e.g. a radius of less than 20 mm, for instance a radius of less than 30 mm. See Fig. 1.

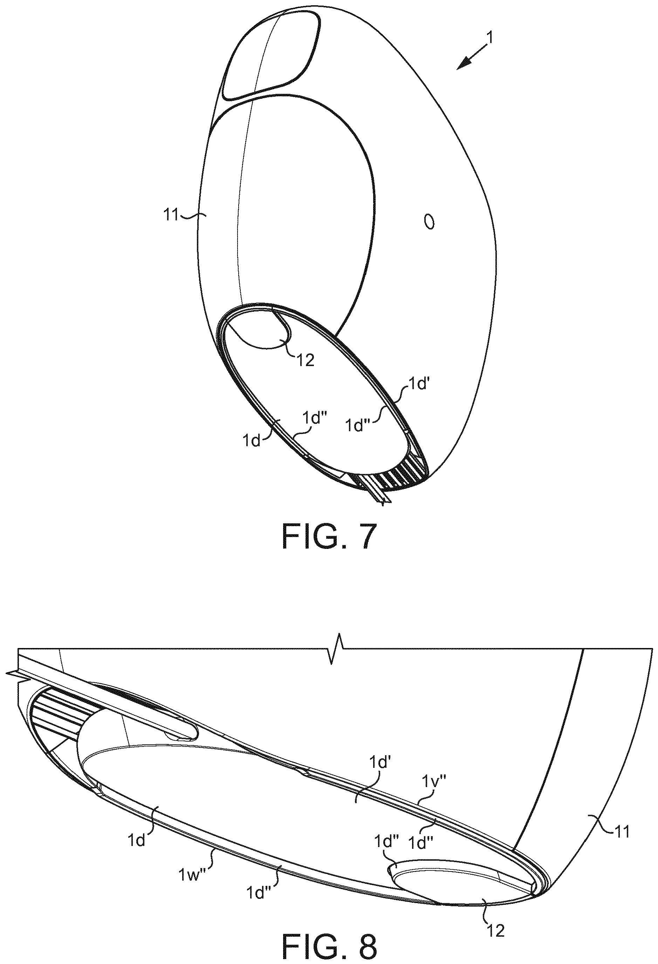

One or more outwardly protruding edges 1v",1w" delimited by outside face 1b,1c,11,1t,1u,1v,1w,1x and bottom 1d at periphery 1d' of bottom 1d and/or one or more outwardly protruding edges 1x''',1x'''' delimited by outside face 1b,1c,11,1t,1u,1v,1w,1x and body inlet 1e at the opening of body inlet 1e can have radii of less than 5 mm, e.g. in the range of 0.1 to 3mm. See Figs 1 and 8.

Outside face 1b,1c,11,1t,1u,1v,1w,1x can be generally convex and/or rounded from bottom 1d to the opening of body inlet 1e. See Fig. 1.

Outside face 1b,1c,11,1t,1u,1v,1w,1x may be made of: at least one extremal side 1t, 1u, e.g. a front side It and/or a rear side 1u; at least two lateral sides 1v, 1w extending from the extremal side(s) 1t,1u; and at least one top side 1x. For instance, outside face 1b,1c,11,1t, 1u,1v,1w,1x is made of lateral and extremal and top sides 1t,1u,1v,1w,1x connected to each other by rounded edges, such as rounded edges having a minimal radius of at least 5 mm, e.g. in the range of 10 to 50 mm. See Fig. 1.

Machine may include liquid tank 15 and a carrier 11,12 assembled to body 1' for carrying tank 15. Carrier 11,12 can be movable with liquid tank 15 as a unit 10 inwards into body 1' into an operative position for supplying liquid to liquid inlet 1" and outwards from body 1' into a service position, such as a service position for filling tank 15 with liquid and/or for cleaning tank 15. See Figs 3 and 4.

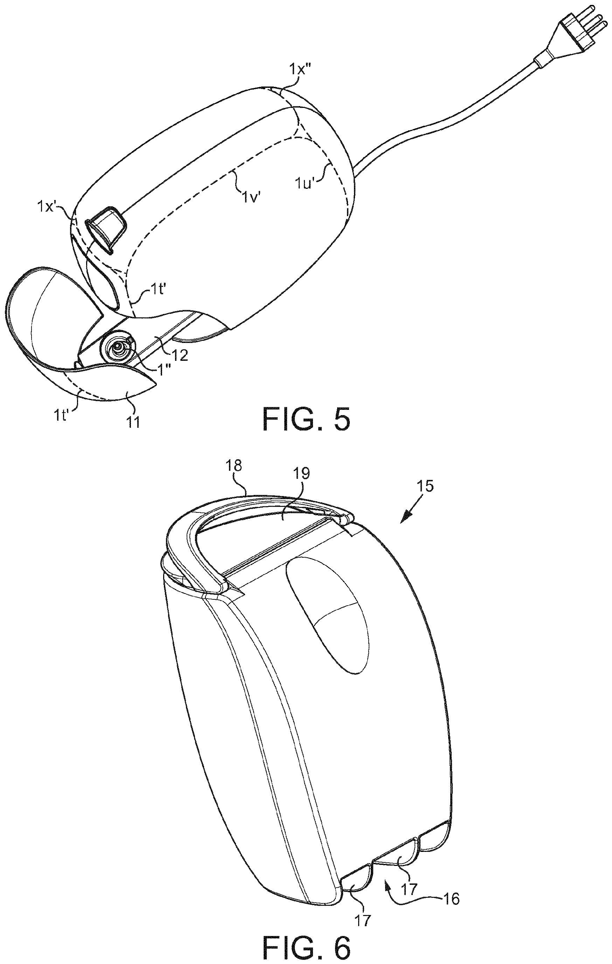

Liquid tank 15 can be removable from carrier 11,12 in the service position, outlet 16 of liquid tank 15 being disconnectable from liquid inlet 1". Tank 15 may have a connector 17 for fastening tank 15 to carrier 11,12, such as a connector 17 for fastening mechanically and/or magnetically tank 15 to carrier 11,12. Connector 17 is for instance located about outlet 16 and spaced apart therefrom. See Figs 4 and 5.

Tank 15 may include a handle 18 for lifting tank 15 and/or for operating a lid 19 of tank 15 between an open and a closed position. For instance, handle 18 is movable, e.g. pivotable, into a collapsed position for moving carrier 11,12 with tank 15 into the operative position and is movable, e.g. pivotable, into a deployed position for facilitating seizure of the handle when carrier 11,12 with tank 15 is in the service position. See Figs 3 and 6.

Machine 1 may include a waste collector 13 for collecting waste material, such as waste ingredient from the fluid line and/or waste liquid from the fluid line. See Figs 3 and 4.

Waste collector 13 can be carried by a carrier 11,12 assembled to body 1' for carrying waste collector 13. Carrier 11,12 can be movable with waste collector 13 as a unit 10 inwards into body 1' into an operative position for collecting waste material and outwards from body 1' into a service position for emptying waste collector 13. For instance, waste collector 13 is removable from carrier 11,12 in the service position. Tank 15 may be carried by carrier 11,12 carrying waste collector 13 so that carrier 11,12 is movable with waste collector 13 and tank 15 as a unit 10 inwards into body 1' into the operative position and outwards from body 1' into the service position. See Figs 3 and 4.

Waste collector 13 may be located adjacent to liquid tank 15 when carried by carrier 11,12. Waste collector 13 may be located between liquid tank 15 and body 1' when carrier 11,12 is in the service position. See Fig. 3.

Carrier 11,12 may have a holding member 12 holding tank 15, and optionally a or said waste collector 13. Member 12 can be generally shaped as an arm moving, e.g. sliding, inwards into and outwards from body 1'. See Figs 4 and 5.

Liquid inlet 1" of fluid line 1",1''' may be fixed to carrier 11,12, such as to a or said member 12 holding tank 15. Inlet 1" may be movable with carrier 11,12. See Fig. 5.

Body 1' may delimit a seat 1a, e.g. a cavity 1a, for receiving unit 10 in the operative position. Carrier 11, 12 can have an external panel or wall 11 for covering seat 1a in the operative position. See Fig. 4.

Outside face 1b,1c,11,1t,1u,1v,1w,1x can be formed by a main outside housing 1b. Carrier, e.g. an or said external panel or wall 11, may be generally flush with outside housing 1b in the operative carrier position. See Fig. 1.

Machine 1 can include an ingredient supply gate 1e" that has an open configuration for allowing a transfer of the flavouring ingredient along ingredient inlet 1e to fluid line 1",1''' and a closed configuration for preventing the transfer of the flavouring ingredient along the ingredient inlet 1e to the fluid line 1",1'''. For instance, gate 1' includes an obstacle 1e', such as one or more sliding and/or swing doors, deployed across ingredient inlet 1e in the closed configuration and at least partly retracted from across the ingredient inlet 1e in the open configuration. Such obstacle can form an ingredient holder, e.g. an ingredient capsule holder, for holding the ingredient prior to the transfer to fluid line 1",1'''. See Figs 1 and 3.

Beverage outlet 1''' may be mounted in an outlet head 1c' of body 1' that is retractable into a rest position and is deployable into a beverage dispensing position. Outlet head 1c' can have an external panel or wall 1c that is generally flush with a or said main outside housing 1b of body 1' in the rest position. See Figs 1 and 2.

Machine 1 may include at least one resilient member 1d" at the periphery 1d' of bottom 1d to form a vibration-dampening foot for placing such machine 1 on an external support surface 100 in an orientation for dispensing a beverage via beverage outlet 1"'. Resilient member 1d" may be water-repellent and extend generally along periphery 1d' to prevent passage beyond member 1d" of water-based liquid on external support surface 100 to underneath bottom 1d. For instance, the water-based liquid is in the form of spills from beverage outlet 1''' or from liquid source 15. Outside face 1b,1c,11,1t,1u,1v, 1w,1x may form: at least one extremal side 1t, 1u, e.g. a front side (1t) and/or a rear side 1u; and at least two lateral sides 1v, 1w extending from extremal side(s) 1t, 1u; and at least one top side 1x, such as lateral and extremal and top sides 1t,1u,1v,1w,1x connected to each other. For instance, source 15, e.g. tank 15, and outlet 1''' are located at the same or different extremal sides 1t, 1u and resilient member(s) 1d" extend from under extremal side(s) 1t, 1u at which source 15 and outlet 1''' are located and extend along and under lateral sides 1v, 1w that extend from extremal sides (s) 1t, 1u. See Figs 7 and 8.

## Claims

1. A machine (1) for preparing a beverage comprising a body (1') that has:
- a fluid line (1",1''') extending from a liquid inlet (1") to a beverage outlet (1'''), such as a liquid inlet (1") connectable to a source of liquid, e.g. a liquid tank (15) that has an outlet (16) connected to the liquid inlet (1");
- a bottom (1d) that has a periphery (1d'), the bottom (1d) forming a foot for placing such machine (1) on an external support surface (100) in an orientation for dispensing a beverage via the beverage outlet (1"'); and
- an outside face (1b,1c,11,1t,1u,1v,1w,1x) that is user-visible when said machine (1) is placed on the bottom (1d), the outside face (1b,1c,11,1t,1u,1v,1w,1x) extending along substantially the entire periphery (1d'), the outside face (1b,1c,11,1t,1u,1v,1w,1x) :
- delimiting an opening of a body inlet (1e) for supplying to the fluid line (1",1'''), e.g. to a mixing chamber comprised in the fluid line, a flavouring ingredient, e.g. a flavouring ingredient supplied within a capsule (2) to the fluid line (1",1''');
- extending all over the body (1') from the periphery (1d') of the bottom (1d) to the opening of the body inlet (1e) over the bottom to confine the body (1'); and
- having outwardly protruding edges (1t',1u',1v',1x', 1x"),
the body (1') having an operative mode for driving liquid from the inlet (1") to the outlet (1"') and an inoperative mode when such machine (1) is switched-off or in a standby mode,
**characterised in that** no outwardly protruding edge (1t',1u',1v',1w',1x") that is user-visible in the inoperative mode and that is confined within the outside face (1b,1c,11,1t,1u,1v,1w,1x), has a radius of less than 5 mm, such as a radius of less than 10 mm, e.g. a radius of less than 20 mm, for instance a radius of less than 30 mm,
optionally one or more outwardly protruding edges (1v",1w") delimited by the outside face (1b,1c,11,1t, 1u,1v,1w,1x) and the bottom (1d) at the periphery (1d') of the bottom (1d) and/or one or more outwardly protruding edges (1x''',1x'''') delimited by the outside face (1b,1c,11) and the body inlet (1e) at the opening of the body inlet (1e) has/have radii of less than 5 mm, e.g. in the range of 0.1 to 3 mm.

2. The machine of claim 1, wherein the outside face (1b,1c,11,1t,1u,1v,1w,1x) is:
- generally convex and/or rounded from the bottom (1d) to the opening of the body inlet (1e); and/or
- made of:
- at least one extremal side (1t,1u), e.g. a front side (1t) and/or a rear side (1u);
- at least two lateral sides (1v,1w) extending from the extremal side(s) (1t,1u); and
- at least one top side (1x),
such as lateral and extremal and top sides (1t,1u,1v,1w,1x) connected to each other by round angles, such as round angles having a minimal radius of at least 5 mm, e.g. in the range of 10 to 50 mm.

3. The machine of claim 1 or 2, which has said tank (15) and a carrier (11,12) assembled to the body (1') for carrying the liquid tank (15), the carrier (11, 12) being movable with the liquid tank (15) as a unit (10) inwards into the body (1') into an operative position for supplying liquid to the liquid inlet (1") and outwards from the body (1') into a service position, such as a service position for filling the tank (15) with liquid and/or cleaning the tank (15) .

4. The machine of claim 3, wherein the liquid tank (15) is removable from the carrier (11,12) in the service position, the outlet (16) of the liquid tank (15) being disconnectable from the liquid inlet (1"), optionally the tank comprising a connector (17) for fastening the tank to the carrier (11,12), such as a connector (17) for fastening mechanically and/or magnetically the tank to the carrier (11,12), the connector (17) being for instance located about the outlet (16) and spaced apart therefrom.

5. The machine of claim 3 or 4, wherein the tank (15) comprises a handle (18) for lifting the tank (15) and/or for operating a lid (19) of the tank (15) between an open and a closed position, optionally the handle (18) being movable, e.g. pivotable, into a collapsed position for moving the carrier (11,12) with the tank (15) into the operative position and being movable, e.g. pivotable, into a deployed position for facilitating seizure of the handle when the carrier (11,12) with the tank is in the service position.

6. The machine of any preceding claim, which comprises a waste collector (13) for collecting waste material, such as waste ingredient from the fluid line and/or waste liquid from the fluid line.

7. The machine of claim 6, wherein the waste collector (13) is carried by a carrier (11,12) assembled to the body (1') for carrying the waste collector (13), the carrier (11,12) being movable with the waste collector (13) as a unit (10) inwards into the body (1') into an operative position for collecting waste material and outwards from the body (1') into a service position for emptying the waste collector (13), such as a waste collector (13) removable from the carrier (11,12) in the service position, said tank (15) being optionally carried by the carrier (11,12) carrying the waste collector (13) so that the carrier (11,12) is movable with the waste collector (13) and the tank (15) as a unit (10) inwards into the body (1') into the operative position and outwards from the body (1') into the service position.

8. The machine of claim 7 when depending on any one of claims 3 to 5, wherein the waste collector (13) is located adjacent to the liquid tank (15) when carried by the carrier (11,12), the waste collector (13) being optionally located between the liquid tank (15) and the body (1') when the carrier (11,12) is in the service position.

9. The machine of any one of claims 3 to 8, wherein the carrier (11,12) comprises a holding member (12) holding the tank (15), and optionally a or said waste collector (13), the holding member (12) being for instance generally shaped as an arm moving, e.g. sliding, inwards into and outwards from the machine's body (1').

10. The machine of any one of claims 3 to 5, wherein the liquid inlet (1") of the body's fluid line (1",1''') is fixed to the carrier (11,12), such as to a or said holding member (12) holding the tank (15), and is movable with the carrier (11,12).

11. The machine of any one of claims 3 to 5 or 7 to 10, wherein the body (1') delimits a seat (1a), e.g. a cavity (1a), for receiving said unit (10) in the operative position, optionally the carrier (11,12) comprising an external panel or wall (11) for covering the seat (1a) in the operative position.

12. The machine of any one of claims 3 to 5 or 7 to 11, wherein the outside face (1b,1c,11,1t,1u,1v,1w,1x) is formed at least in part by a main outside housing (1b), said carrier, e.g. an or said external panel or wall (11), being generally flush with the outside housing (1b) in the operative position.

13. The machine of any preceding claim, which comprises an ingredient supply gate (1e') that has an open configuration for allowing a transfer of the flavouring ingredient along the ingredient inlet (1e) to the fluid line (1",1''') and a closed configuration for preventing the transfer of the flavouring ingredient along the ingredient inlet (1e) to the fluid line (1",1'''), optionally the gate including an obstacle (1e'), such as one or more sliding and/or swing doors, deployed across the ingredient inlet (1e) in the closed configuration and at least partly retracted from across the ingredient inlet (1e) in the open configuration, said obstacle forming for instance an ingredient holder, e.g. an ingredient capsule holder, for holding said ingredient prior to the transfer to the fluid line (1",1''').

14. The machine of any preceding claim, wherein the beverage outlet (1"') is mounted in an outlet head (1c') of the body (1') that is retractable into a rest position and is deployable into a beverage dispensing position, the outlet head (1c') having optionally an external panel or wall (1c) that is generally flush with a or said main outside housing (1b) of the body (1') in the rest position.

15. The machine of any preceding claim, which comprises at least one resilient member (1d") at the periphery (1d') of the bottom (1d) to form a vibration-dampening foot for placing such machine (1) on an external support surface (100) in an orientation for dispensing a beverage via the beverage outlet (1"'), the resilient member (1d") being water-repellent and extending generally along the periphery (1d') to prevent passage beyond the member (1d") of water-based liquid on said external support surface (100) to underneath the bottom (1d), such as water-based liquid in the form of spills from the beverage outlet (1"') or from said liquid source (15),
optionally the outside face (1b,1c,11,1t,1u,1v,1w,1x) forming at least one extremal side (1t,1u), e.g. a front side (1t) and/or a rear side (1u), and at least two lateral sides (1v,1w) extending from the extremal side(s) (1t,1u), and at least one top side (1x), such as lateral and extremal and top sides (1t,1u,1v,1w,1x) connected to each other, said source (15), e.g. tank (15), and the outlet (1''') being located at the same or different extremal sides (1t,1u) and the member(s) (1d") extending from under the extremal side(s) (1t,1u) at which the source (15) and the outlet (1"') are located and extending along and under the lateral sides (1v,1w) that extend from said extremal sides (s) (1t,1u).

## Patentansprüche

1. Maschine (1) zur Zubereitung eines Getränks, umfassend einen Körper (1'), der aufweist:
- eine Fluidleitung (1",1'''), die sich von einem Flüssigkeitseinlass (1") zu einem Getränkeauslass (1"') erstreckt, wie beispielsweise einem Flüssigkeitseinlass (1"), der mit einer Flüssigkeitsquelle, z. B. einem Flüssigkeitstank (15) verbindbar ist, der einen Auslass (16) aufweist, der mit dem Flüssigkeitseinlass (1") verbunden ist;
- einen Boden (1d), der einen Umfang (1d') aufweist, wobei der Boden (1d) einen Fuß zum Anordnen einer solchen Maschine (1) auf einer externen Auflagefläche (100) in einer Ausrichtung zum Ausgeben eines Getränks über den Getränkeauslass (1"') bildet, und
- eine Außenfläche (1b,1c,11,1t,1u,1v,1w,1x), die für den Benutzer sichtbar ist, wenn die Maschine (1) auf dem Boden (1d) angeordnet ist, wobei die Außenfläche (1b,1c,11,1t,1u,1v,1w,1x) sich im Wesentlichen entlang des gesamten Umfangs (1d') erstreckt,
wobei die Außenfläche(1b,1c,11,1t,1u,1v,1w,1x):
- eine Öffnung eines Körpereinlasses (1e) zur Zuführung in die Fluidleitung (1", 1"'), z. B. in eine in der Fluidleitung umfasste Mischkammer, eines Aromastoffbestandteils, z. B. eines Aromastoffbestandteils, der in einer Kapsel (2) in die Fluidleitung (1",1'") zugeführt wird, begrenzt;
- sich über den gesamten Körper (1') vom Umfang (1d') des Bodens (1d) bis zur Öffnung des Körpereinlasses (1e) über den Boden erstreckt, um den Körper (1') zu einzugrenzen; und
- nach außen vorstehende Ränder (1t', 1u', 1v', 1x', 1x") aufweist,
wobei der Körper (1') einen Betriebsmodus zum Treiben von Flüssigkeit vom Einlass (1") zum Auslass (1"') und einen Nichtbetriebsmodus aufweist, wenn eine solche Maschine (1) ausgeschaltet oder in einem Standby-Modus ist,
**dadurch gekennzeichnet, dass** kein nach außen vorstehender Rand (1t', 1u', 1v', 1w', 1x"), der von einem Benutzer im Nichtbetriebsmodus sichtbar und innerhalb der Außenfläche (1b, 1c, 11, 1t, 1u, 1v, 1w, 1x) eingegrenzt ist, einen Radius von weniger als 5 mm aufweist, z. B. einen Radius von weniger als 10 mm, z. B. einen Radius von weniger als 20 mm, zum Beispiel einen Radius von weniger als 30 mm, wobei wahlweise ein oder mehrere nach außen vorstehende Ränder (1v", 1w"), die durch die Außenfläche (1b, 1c, 11, 1t, 1u, 1v, 1w, 1x) und den Boden (1d) am Umfang (1d') des Bodens (1d) und/oder ein oder mehrere nach außen vorstehende Ränder (1x"',1x"") eingegrenzt sind, die durch die Außenfläche (1b, 1c, 11) und den Körpereinlass (1e) an der Öffnung des Körpereinlasses (1e) eingegrenzt sind, Radien von weniger als 5 mm, z. B. im Bereich von 0,1 bis 3 mm aufweist/aufweisen.

2. Maschine nach Anspruch 1, wobei die Außenfläche (1b, 1c, 11, 1t, 1u, 1v, 1w, 1x) ist:
- im Allgemeinen konvex und/oder abgerundet vom Boden (1d) zur Öffnung des Körpereinlasses (1e); und/oder
- besteht aus:
- mindestens einer Extremseite (1t, 1u), z. B. einer Vorderseite (1t) und/oder einer Rückseite (1u);
- mindestens zwei seitlichen Seiten (1v, 1w), die sich von der/den Extremseite(n) (1t, 1u) erstrecken; und
- mindestens einer Oberseite (1x),
wie beispielsweise seitliche Seiten und Extremseiten und Oberseiten (1t, 1u, 1v, 1w, 1x), die durch runde Winkel, wie beispielsweise runde Winkel mit einem minimalen Radius von mindestens 5 mm, z. B. im Bereich von 10 bis 50 mm, miteinander verbunden sind.

3. Maschine nach Anspruch 1 oder 2, die den Tank (15) und einen Träger (11, 12) aufweist, der an dem Körper (1') zum Tragen des Flüssigkeitstanks (15) angeordnet ist, wobei der Träger (11, 12) mit dem Flüssigkeitstank (15) als eine Einheit (10) nach innen in den Körper (1') in eine Betriebsposition zum Zuführen von Flüssigkeit zum Flüssigkeitseinlass (1") und nach außen aus dem Körper (1') in eine Wartungsposition, wie beispielsweise eine Wartungsposition zum Befüllen des Tanks (15) mit Flüssigkeit und/oder zur Reinigung der Tanks (15), bewegbar ist.

4. Maschine nach Anspruch 3, wobei der Flüssigkeitstank (15) von dem Träger (11, 12) in der Wartungsposition entfernbar ist, wobei der Auslass (16) des Flüssigkeitstanks (15) von dem Flüssigkeitseinlass (1") trennbar ist, wobei der Tank wahlweise einen Verbinder (17) zur Befestigung des Tanks an dem Träger (11, 12), wie beispielsweise einen Verbinder (17) zur mechanischen und/oder magnetischen Befestigung des Tanks an dem Träger (11, 12) umfasst, wobei der Verbinder (17) beispielsweise um den Auslass (16) herum und beabstandet davon angeordnet ist.

5. Maschine nach Anspruch 3 oder 4, wobei der Tank (15) einen Griff (18) zum Anheben des Tanks (15) und/oder zum Betätigen eines Deckels (19) des Tanks (15) zwischen einer offenen und einer geschlossenen Position umfasst, wobei der Griff (18) wahlweise beweglich, z. B. schwenkbar, in eine zusammengeklappte Position ist zum Bewegen des Trägers (11, 12) mit dem Tank (15) in die Betriebsposition und bewegbar, z. B. schwenkbar, zum leichteren Erfassen des Griffs in eine ausgefahrene Position ist, wenn der Träger (11, 12) mit dem Tank sich in der Wartungsposition befindet.

6. Maschine nach einem der vorhergehenden Ansprüche, die einen Abfallsammler (13) zum Sammeln von Abfallmaterial, wie beispielsweise Abfallbestandteile aus der Fluidleitung und/oder Abfallflüssigkeit aus der Fluidleitung umfasst.

7. Maschine nach Anspruch 6, wobei der Abfallsammler (13) von einem Träger (11, 12) getragen wird, der an dem Körper (1') zum Tragen des Abfallsammlers (13) angebracht ist, wobei der Träger (11, 12) mit dem Abfallsammler (13) als eine Einheit (10) nach innen in den Körper (1') in eine Betriebsposition zum Sammeln von Abfallmaterial und nach außen aus dem Körper (1') in eine Wartungsposition zum Entleeren des Abfallsammlers (13) bewegbar ist, wie etwa ein Abfallsammler (13), der von dem Träger (11, 12) in der Wartungsposition entfernbar ist, wobei der Tank (15) wahlweise vom Träger (11, 12) getragen wird, der den Abfallsammler (13) trägt, sodass der Träger (11, 12) mit dem Abfallsammler (13) und dem Tank (15) als eine Einheit (10) nach innen in den Körper (1') in die Betriebsstellung und nach außen aus dem Körper (1') in die Wartungsposition bewegbar ist.

8. Maschine nach Anspruch 7, wenn abhängig von einem der Ansprüche 3 bis 5, wobei der Abfallsammler (13) angrenzend an den Flüssigkeitstank (15) angeordnet ist, wenn er vom Träger (11, 12) getragen wird, wobei der Abfallsammler (13) wahlweise zwischen dem Flüssigkeitstank (15) und dem Körper (1') angeordnet ist, wenn der Träger (11, 12) sich in der Wartungsposition befindet.

9. Maschine nach Anspruch 3 bis 8, wobei der Träger (11, 12) ein Halteelement (12) zum Halten des Tanks (15) und wahlweise eines oder des Abfallsammlers (13) umfasst, wobei das Halteelement (12) im Allgemeinen beispielsweise als ein sich nach innen in den und nach außen aus dem Körper (1') der Maschine bewegender, z. B. gleitender, Arm geformt ist.

10. Maschine nach einem der Ansprüche 3 bis 5, wobei der Flüssigkeitseinlass (1") der Fluidleitung (1", 1"') des Körpers an dem Träger (11, 12), wie beispielsweise an einem oder dem Halteelement (12) zum Halten des Tanks (15), befestigt ist und mit dem Träger (11, 12) beweglich ist.

11. Maschine nach einem der Ansprüche 3 bis 5 oder 7 bis 10, wobei der Körper (1') einen Sitz (1a), z. B. einen Hohlraum (1a), zur Aufnahme der Einheit (10) in der Betriebsposition begrenzt, wobei der Träger (11, 12) wahlweise eine externe Platte oder Wand (11) zum Bedecken des Sitzes (1a) in der Betriebsposition umfasst.

12. Maschine nach einem der Ansprüche 3 bis 5 oder 7 bis 11, wobei die Außenfläche (1b, 1c, 11, 1t, 1u, 1v, 1w, 1x) mindestens teilweise durch ein Hauptaußengehäuse (1b) gebildet ist, wobei der Träger, z. B. eine oder die externe Platte oder Wand (11), in der Betriebsposition im Allgemeinen bündig mit dem Außengehäuses (1b) ist.

13. Maschine nach einem der vorstehenden Ansprüche, die ein Bestandteilzufuhrtor (1e') umfasst, das eine offene Konfiguration zur Ermöglichung einer Übertragung des Aromastoffbestandteils entlang des Bestandteileinlasses (1e) in die Fluidleitung (1", 1'''), und eine geschlossene Konfiguration zur Verhinderung der Übertragung des Aromastoffbestandteils entlang des Bestandteileinlasses (1e) in die Fluidleitung (1", 1"') aufweist, wobei das Tor wahlweise ein Hindernis (1e'), wie beispielsweise eine oder mehrere verschiebbare und/oder schwenkbare Türen, einschließt, das in der geschlossenen Konfiguration über den Bestandteileinlass (1e) ausgefahren ist und in der offenen Konfiguration mindestens teilweise von über dem Bestandteileinlass (1e) zurückgezogen ist, wobei das Hindernis beispielsweise einen Bestandteilhalter, z. B. einen Bestandteilkapselhalter, zum Halten des Bestandteils vor der Übertragung in die Fluidleitung (1", 1''') bildet.

14. Maschine nach einem der vorstehenden Ansprüche, wobei der Getränkeauslass (1''') in einem Auslasskopf (1c') des Körpers (1') angebracht ist, der in eine Ruheposition zurückziehbar ist und in einer Getränkeausgabeposition ausfahrbar ist, wobei der Auslasskopf (1c') wahlweise eine externe Platte oder Wand (1c) aufweist, die in der Ruheposition im Allgemeinen bündig mit einem oder dem Hauptaußengehäuse (1b) des Körpers (1') ist.

15. Maschine nach einem der vorhergehenden Ansprüche, welche mindestens ein elastisches Element (1d") am Umfang (1d') des Bodens (1d) umfasst, um einen Schwingungsdämpfungsfuß zum Anordnen einer solchen Maschine (1) auf einer externen Auflagefläche (100) in einer Ausrichtung zum Ausgeben eines Getränks über den Getränkeauslass (1''') zu bilden, wobei das elastische Element (1d") wasserabweisend ist und sich im Allgemeinen entlang des Umfangs (1d') erstreckt, um den Durchgang über das Element (1d") von wasserbasierter Flüssigkeit auf der externen Auflagefläche (100) bis unterhalb des Bodens (1d), wie beispielsweise wasserbasierte Flüssigkeit in Form von Überlauf aus dem Getränkeauslass (1"') oder aus der Flüssigkeitsquelle (15) zu verhindern,
wobei wahlweise die Außenfläche (1b, 1c, 11, 1t, 1u, 1v, 1w, 1x) mindestens eine Extremseite (1t, 1u), z. B. eine Vorderseite (1t) und/oder einer Rückseite (1u), und mindestens zwei seitliche Seiten (1v, 1w), die sich von der/den Extremseite(n) (1t, 1u) erstrecken, und mindestens eine Oberseite (1x), wie beispielsweise seitliche Seiten und Extremseiten und Oberseiten (1t, 1u, 1v, 1w, 1x), die miteinander verbunden sind, bildet, wobei die Quelle (15), z. B. der Tank (15), und der Auslass (1''') sich an der gleichen oder unterschiedlichen Extremseiten (1t, 1u) befinden und das/die Element(e) (1d") sich von unterhalb der Extremseite(n) (1t, 1u), an der/denen die Quelle (15) und der Auslass (1"') angeordnet sind, erstrecken und sich entlang und unterhalb der seitlichen Seiten (1v, 1w), die sich von der/den Extremseite(n) (1t, 1u) erstrecken, erstrecken.

## Revendications

1. Machine (1) de préparation de boisson comprenant un corps (1') qui présente :
- une conduite de fluide (1", 1"') s'étendant d'une arrivée de liquide (1") à une sortie de boisson (1"'), telle qu'une entrée de liquide (1") raccordable à une source de liquide, par exemple un réservoir de liquide (15) qui présente une sortie (16) raccordée à l'entrée de liquide (1") ;
- un fond (1d) ayant une périphérie (1d'), le fond (1d) formant un pied pour placer une telle machine (1) sur une surface de support externe (100) dans une orientation pour distribuer une boisson par l'intermédiaire de la sortie de boisson (1"'); et
- une face extérieure (1b, 1c, 11, 1t, 1u, 1v, 1w, 1x) visible par l'utilisateur lorsque ladite machine (1) est placée sur le fond (1d), la face extérieure (1b, 1c, 11, 1t, 1u, 1v, 1w, 1x) s'étendant sensiblement le long de la totalité de la périphérie (1d'),
la face extérieure (1b, 1c, 11, 1t, 1u, 1v, 1w, 1x) :
- délimitant une ouverture d'une entrée de corps (1e) pour fournir à la conduite de fluide (1", 1'''), par exemple vers une chambre de mélange comprise dans la conduite de fluide, un ingrédient aromatisant, par exemple un ingrédient aromatisant fourni à l'intérieur d'une capsule (2) jusqu'à la conduite de fluide (1", 1"') ;
- s'étendant sur tout le corps (1') de la périphérie (1d') du fond (1d) vers l'ouverture de l'entrée de corps (1e) sur le fond pour confiner le corps (1') ; et
- ayant des bords saillant vers l'extérieur (1t', 1u', 1v', 1x', 1x"),
le corps (1') ayant un mode opérationnel d'entraînement du liquide de l'entrée (1") vers la sortie (1''') et un mode non opérationnel lorsque cette machine (1) est mise hors tension ou en mode veille,
**caractérisée en ce qu'**aucun bord saillant vers l'extérieur (1t', 1u', 1v', 1w', 1x") qui est visible par l'utilisateur dans le mode inopérant et qui est confiné à l'intérieur de la face extérieure (1b, 1c, 11, 1t, 1u, 1v, 1w, 1x), a un rayon de moins de 5 mm, tel qu'un rayon inférieur à 10 mm, par ex. un rayon inférieur à 20 mm, par exemple un rayon inférieur à 30 mm, facultativement un ou plusieurs bords saillant vers l'extérieur (1v", 1w") délimités par la face extérieure (1b, 1c, 11, 1t, 1u, 1v, 1w, 1x) et le fond (1d) au niveau de la périphérie (1d') du fond (1d) et/ou un ou plusieurs bords saillant vers l'extérieur (1x''', 1x'''') délimités par la face extérieure (1b, 1c, 11) et l'entrée de corps (1e) au niveau de l'entrée de corps (1e) au niveau de l'ouverture de l'entrée de corps (1e) a/ont des rayons de moins de 5 mm, par ex. dans la plage de 0.1 à 3 mm.

2. Machine selon la revendication 1, dans laquelle la face extérieure (1b, 1c, 11, 1t, 1u, 1v, 1w, 1x) est :
- généralement convexe et/ou arrondie du fond (1d) à l'ouverture de l'entrée de corps (1e) ; et/ou
- constituée :
- d'au moins un côté extrémal (1t, 1u), par exemple un côté avant (1t) et/ou un côté arrière (1u) ;
- d'au moins deux côtés latéraux (1v, 1w) s'étendant à partir du ou des côtés extrémaux (1t, 1u) ; et
- d'au moins un côté supérieur (1x),
tel que des côtés latéraux et extrémaux et supérieurs (1t, 1u, 1v, 1w, 1x) reliés les uns aux autres par des angles ronds, tels que des angles ronds présentent un rayon minimum d'au moins 5 mm, par ex. dans la plage de 10 à 50 mm.

3. Machine selon la revendication 1 ou 2, qui présente ledit réservoir (15) et un support (11, 12) assemblé sur le corps (1') pour transporter le réservoir de liquide (15), le support (11, 12) étant mobile avec le réservoir de liquide (15) en tant qu'unité (10) vers l'intérieur dans le corps (1') dans une position de travail pour fournir du liquide à l'entrée de liquide (1") et vers l'extérieur à partir du corps (1') dans une position de service, telle qu'une position de service pour remplir le réservoir (15) avec du liquide et/ou un nettoyant du réservoir (15).

4. Machine selon la revendication 3, dans laquelle le réservoir de liquide (15) est amovible du support (11, 12) dans la position de service, la sortie (16) du réservoir de liquide (15) étant déconnectable de l'entrée de liquide (1"), facultativement le réservoir comprenant un connecteur (17) pour une fixation du réservoir au support (11, 12), tel qu'un connecteur (17) afin de fixer mécaniquement et/ou par voie magnétique le réservoir au support (11, 12), le connecteur (17) étant par exemple situé autour de la sortie (16) et espacé de celle-ci.

5. Machine selon la revendication 3 ou 4, dans laquelle le réservoir (15) comprend une poignée (18) pour lever le réservoir (15) et/ou pour utiliser un couvercle (19) du réservoir (15) entre une position ouverte et une fermée, facultativement la poignée (18) étant mobile, par ex., pivotant, dans une position pliée pour déplacer le support (11, 12) avec le réservoir (15) dans la position de travail et étant mobile, par ex., pivotant, dans une position déployée permettant de faciliter la préhension de la poignée lorsque le support (11, 12) avec le réservoir est dans la position de service.

6. Machine selon l'une quelconque des revendications précédentes, qui comprend un bac à déchets (13) pour collecter les déchets, tels qu'un ingrédient résiduel depuis un conduit de fluide et/ou un liquide résiduel provenant de la conduite de liquide.

7. Machine selon la revendication 6, dans laquelle le bac à déchets (13) est porté par un support (11, 12) assemblé sur le corps (1') pour porter le bac à déchets (13), le support (11, 12) étant mobile avec le bac à déchets (13) en tant qu'unité (10) vers l'intérieur dans le corps (1') dans une position de travail pour recueillir des déchets et vers l'extérieur à partir du corps (1') dans une position de service pour vider le bac à déchets (13), tel qu'un bac à déchets (13) pouvant être retiré du support (11, 12) dans la position de service, ledit réservoir (15) étant facultativement porté par le support (11, 12) portant le bac à déchets (13) de façon à ce que le support (11, 12) soit mobile avec le bac à déchets (13) et le réservoir (15) en tant qu'unité (10) vers l'intérieur dans le corps (1') dans une position de travail et vers l'extérieur à partir du corps (1') dans une position de service.

8. Machine selon la revendication 7 lorsqu'elle dépend de l'une quelconque des revendications 3 à 5, dans laquelle le bac à déchets (13) est situé de manière adjacente au réservoir de liquide (15) lorsqu'il est porté par le support (11, 12), le bac à déchets (13) étant éventuellement situé entre le réservoir de liquide (15) et le corps (1') lorsque le support (11, 12) est dans la position de service.

9. Machine selon l'une quelconque des revendications 3 à 8, dans laquelle le support (11, 12) comprend un élément de maintien (12) maintenant le réservoir (15), et facultativement un ou ledit bac à déchets (13), l'élément de maintien (12) étant par exemple généralement en forme de bras se déplaçant, par ex., coulissant, vers l'intérieur dans et vers l'extérieur depuis le corps de la machine (1').

10. Machine selon l'une quelconque des revendications 3 à 5, dans laquelle l'entrée de liquide (1") du conduit de liquide (1 ", 1''') du corps est fixée au support (11, 12), comme sur un ou ledit élément de maintien (12) maintenant le réservoir (15), et est mobile avec le support (11, 12).

11. Machine selon l'une quelconque des revendications 3 à 5 ou 7 à 10, dans laquelle le corps (1') délimite un siège (1a), par ex. une cavité (1a), pour recevoir ladite unité (10) en position de travail, facultativement le support (11, 12) comprenant un panneau ou une paroi externe (11) pour recouvrir le siège (1a) dans la position de travail.

12. Machine selon l'une quelconque des revendications 3 à 5 ou 7 à 11, dans laquelle la face extérieure (1b, 1c, 11, 1t, 1u, 1v, 1w, 1x) est formée au moins en partie par un boîtier extérieur principal (1b), ledit support, par exemple un ou ledit panneau ou paroi externe (11), étant généralement affleurant au boîtier extérieur (1b) en position de travail.

13. Machine selon une quelconque revendication précédente, qui comprend une porte de fourniture d'ingrédient (1e') qui a une configuration ouverte pour permettre un transfert de l'ingrédient aromatisant le long de l'entrée d'ingrédient (1e) vers le conduit de fluide (1", 1''') et une configuration fermée pour empêcher le transfert de l'ingrédient aromatisant le long de l'entrée d'ingrédient (1e) vers le conduit de fluide (1", 1'''), éventuellement la porte comprenant un obstacle (1e'), tel qu'une ou plusieurs portes basculantes et/ou coulissantes, déployé à travers l'entrée d'ingrédient (1e) dans la configuration fermée et au moins partiellement rétracté à travers l'entrée d'ingrédient (1e) dans la configuration ouverte, ledit obstacle formant par exemple un dispositif de maintien d'ingrédient, par ex., un dispositif de maintien de capsule d'ingrédient, pour maintenir ledit ingrédient avant le transfert vers le conduit de fluide (1", 1''').

14. Machine selon une quelconque revendication précédente, dans laquelle la sortie de boisson (1''') est montée dans une tête de sortie (1c') du corps (1') qui est escamotable dans une position de repos et déployable dans une position de distribution de boisson, la tête de sortie (1c') ayant facultativement un panneau ou une paroi externe (1c) qui sont généralement affleurants avec un ou ledit boîtier extérieur principal (1b) du corps (1') dans une position de repos.

15. Machine selon l'une quelconque des revendications précédentes, qui comprend au moins un élément élastique (1d") au niveau de la périphérie (1d') du fond (1d) de façon à former un pied amortisseur de vibration pour placer la machine (1) sur une surface de support externe (100) dans une orientation pour distribuer une boisson par le biais de la sortie de boisson (1'"), l'élément élastique (1d") étant hydrofuge et s'étendant généralement le long de la périphérie (1d') pour empêcher le passage au-delà de l'élément (1d") de liquide à base d'eau sur ladite surface de support externe (100) jusqu'au-dessous du fond (1d), tel que sous la forme de liquide à base d'eau sous la forme de déversements depuis la sortie de boisson (1''') ou de ladite source de liquide (15),
facultativement la face extérieure (1b, 1c, 11, 1t, 1u, 1v, 1w, 1x) formant au moins un côté extrémal (1t, 1u), par ex. un côté avant (1t) et/ou un côté arrière (1u), et au moins deux côtés latéraux (1v, 1w) s'étendant à partir du ou des côtés extrémaux (1t, 1u), et au moins un côté supérieur (1x), tel que des côtés latéraux et extrémaux et supérieurs (1t, 1u, 1v, 1w, 1x) raccordés les uns aux autres, ladite source (15), par ex., un réservoir (15), et la sortie (1''') étant situées au niveau des mêmes ou de différents côtés extrémaux (1t, 1u) et le ou les éléments (1d") s'étendant depuis le dessous du ou des côtés extrémaux (1t, 1u) au niveau desquels la source (15) et la sortie (1''') sont situées et s'étendant le long et sous les côtés latéraux (1v, 1w) qui s'étendent à partir desdits un ou plusieurs côtés extrémaux (1t, 1u).
